# EUROPEAN PATENT APPLICATION

(11) **EP 4 407 443 A1**
(43) Date of publication of application: **31.07.2024**
(21) Application number: 22880112.2
(22) Date of filing: 21.09.2022
(51) Int. Cl.: G06F 8/65, G06F 8/654

(54) **APPLICATION UPGRADING METHOD AND APPARATUS, AND COMPUTING DEVICE AND CHIP SYSTEM**

(30) Priority: 14.10.2021 CN 202111196030; 31.12.2021 CN 202111667437
(71) Applicant: Huawei Technologies Co., Ltd., Shenzhen, Guangdong 518129 (CN)
(72) Inventor: HU, Quanbo, Shenzhen, Guangdong 518129 (CN); QIN, Guo, Shenzhen, Guangdong 518129 (CN); HU, Youjin, Shenzhen, Guangdong 518129 (CN)
(74) Representative: Epping - Hermann - Fischer
(86) International application number: PCT/CN2022/120324
(87) International publication number: WO 2023/061172

(57) **Abstract**

An application upgrade method and apparatus, a computing device, and a chip system are disclosed, and relate to the computer field. The method is performed by a DPU connected to a host. The method includes: When upgrading a first application program in a plurality of application programs running on the DPU, the DPU reads pre-upgrade data of the first application program from a shared storage area of an internal memory in the DPU, and restores a service of the first application program based on the pre-upgrade data. Because the shared storage area is an area inaccessible to an operating system of the DPU, even if the service of the first application program is interrupted when the DPU upgrades the first application program, the operating system of the DPU does not reclaim the shared storage area, to avoid a loss of the pre-upgrade data of the first application program stored in the shared storage area. After upgrading the running first application program, the DPU can read the pre-upgrade data of the first application program from the shared storage area. Therefore, the DPU can quickly restore the service when upgrading the application program.

## Description

This application claims priority to Chinese Patent Application No. 202111196030.0, filed with the China National Intellectual Property Administration on October 14, 2021 and entitled "METHOD FOR UPGRADING DPU CARD SYSTEM SOFTWARE", and to Chinese Patent Application No. 202111667437.7, filed with the China National Intellectual Property Administration on December 31, 2021 and entitled "APPLICATION UPGRADE METHOD AND APPARATUS, COMPUTING DEVICE, AND CHIP SYSTEM", which are incorporated herein by reference in their entireties.

### TECHNICAL FIELD

This application relates to the computer field, and in particular, to an application upgrade method and apparatus, a computing device, and a chip system.

### BACKGROUND

A data processing unit (DPU) is a multi-core processor with a high-performance computing capability. The DPU offloads applications related to artificial intelligence, storage, and the like that run on another chip (for example, a central processing unit (central processing unit, CPU) or a graphics processing unit (graphics processing unit, GPU)) in a host, to improve data processing performance of the host and reduce host load.

Currently, an application program of a new version takes effect by restarting the host to which the DPU is connected or restarting an operating system of the DPU. As a result, a service is interrupted when the DPU runs the application program, in other words, service processing fails. The operating system of the DPU is initialized to restore the service after being restarted. In addition, restart duration of the operating system is usually long (for example, at a minute level), leading to a long service interruption of the DPU and reducing user experience. Therefore, how to restore a service as soon as possible during upgrading of an application program of a DPU is an urgent problem to be resolved currently.

### SUMMARY

This application provides an application upgrade method and apparatus, a computing device, and a chip system, to restore a service as soon as possible during upgrading of an application program of a DPU.

According to a first aspect, an application upgrade method is provided. The method is performed by a DPU connected to a host. The method includes: When upgrading a first application program in a plurality of application programs running on the DPU, the DPU reads pre-upgrade data of the first application program from a shared storage area of an internal memory in the DPU, and restores a service of the first application program based on the pre-upgrade data. The shared storage area is used to store service data of the plurality of application programs. The shared storage area is inaccessible to an operating system of the DPU.

In this way, because the shared storage area is an area inaccessible to the operating system of the DPU, even if the service of the first application program is interrupted when the DPU upgrades the first application program, the operating system of the DPU does not reclaim the shared storage area. Therefore, a loss of the pre-upgrade data of the first application program stored in the shared storage area is avoided. After upgrading the running first application program, the DPU reads the pre-upgrade data of the first application program from the shared storage area. Therefore, the DPU can quickly restore the service when upgrading the application program, to improve user experience.

In a possible implementation, before the upgrading a first application program in a plurality of application programs running on the DPU, the method further includes: receiving an upgrade request sent by the host; and responding to the upgrade request, suspending the service of the first application program, and storing the pre-upgrade data of the first application program in the shared storage area. The upgrade request indicates to upgrade the first application program. The pre-upgrade data includes service data of the first application program and a hardware status during running of the first application program before the first application program is upgraded. Therefore, when upgrading the first application program, the DPU can quickly read the service data of the first application program and the hardware status during running of the first application program, quickly restore the service, and shorten duration of upgrading the application program, to improve user experience.

In another possible implementation, when starting a process of the first application program for the first time, the DPU allocates, from the internal memory, a shared storage area used to store the service data and the hardware status of the first application program to the first application program.

In another possible implementation, the shared storage area includes a plurality of sub-areas, and each of the plurality of sub-areas is used to store service data and a hardware status of one of the plurality of application programs.

According to a second aspect, an application upgrade apparatus is provided. The apparatus includes modules configured to perform the application upgrade method according to any one of the first aspect or the possible designs of the first aspect.

According to a third aspect, a processor is provided. The processor is configured to perform operation steps of the application upgrade method according to any one of the first aspect or the possible designs of the first aspect.

According to a fourth aspect, a computing device is provided. The computing device includes at least one processor and a memory. The memory is configured to store a set of computer instructions. When executing the set of computer instructions as an execution device according to any one of the first aspect or the possible implementations of the first aspect, the processor performs operation steps of the application upgrade method according to any one of the first aspect or the possible implementations of the first aspect.

According to a fifth aspect, a computer-readable storage medium is provided. The computer-readable storage medium includes computer software instructions. When the computer software instructions are run on a computing device, the computing device is enabled to perform operation steps of the method according to any one of the first aspect or the possible implementations of the first aspect.

According to a sixth aspect, a computer program product is provided. When the computer program product runs on a computer, the computer is enabled to perform operation steps of the method according to any one of the first aspect or the possible implementations of the first aspect.

According to a seventh aspect, a chip system is provided. The chip system includes a processor, configured to implement a function of the processor in the method according to the first aspect. In a possible design, the chip system further includes a memory, configured to store program instructions and/or data. The chip system may include a chip, or may include a chip and another discrete component.

The implementations provided in the foregoing aspects may be further combined to provide more implementations in this application.

### BRIEF DESCRIPTION OF DRAWINGS

FIG. 1 is a schematic diagram of a computer device according to an embodiment of this application;
FIG. 2 is a schematic flowchart of an application upgrade method according to an embodiment of this application;
FIG. 3 is a schematic diagram of a shared storage area according to an embodiment of this application;
FIG. 4 is a schematic diagram of an application upgrade scenario according to this application;
FIG. 5 is a schematic diagram of an application upgrade apparatus according to this application; and
FIG. 6 is a schematic diagram of a structure of a computing device according to this application.

### DESCRIPTION OF EMBODIMENTS

An application program is a computer program that meets a user requirement and implements a specific function. To fix defects of the application program, enhance functions of the application program, and improve user experience, the application program is upgraded.

Embodiments of this application provide an application upgrade method, and in particular, a technology for upgrading an application program running on a data processing unit (data processing unit, DPU). When an application program is upgraded, the application program is separated from an operating system to avoid restarting the operating system of the DPU, so as to shorten duration of upgrading the application program. In addition, before the application program is upgraded, pre-upgrade data of the application program is stored in a storage area inaccessible to the operating system of the DPU, to avoid a loss of service data of the application program stored in the storage area. Therefore, the DPU can quickly restore a service when upgrading the application program, to improve user experience.

The DPU may be installed on a computer device, and may be upgraded as indicated by the computer device. The computer device may be an independent server or a computing device in a computing cluster. The following describes application upgrade implementations provided in embodiments of this application in detail with reference to the accompanying drawings.

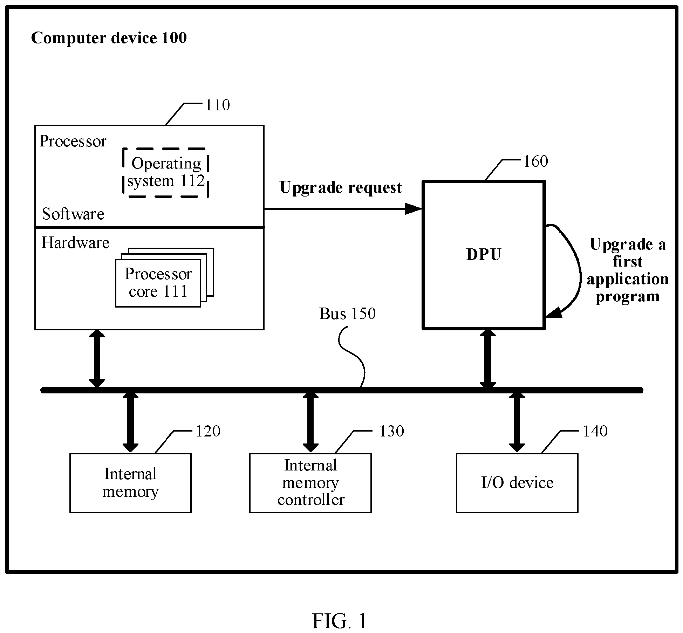

FIG. 1 is a schematic diagram of a computer device according to an embodiment of this application. As shown in FIG. 1, the computer device 100 includes a processor (Processor) 110, an internal memory 120, and an internal memory controller (Memory Controller) 130.

The processor 110 is a computing core and a control core of the computer device 100. The processor 110 may be an ultra-large-scale integrated circuit. An operating system 112 and another software program are installed in the processor 110, to enable the processor 110 to access the internal memory 120 and various peripheral component interconnect express (Peripheral Component Interconnect Express, PCIe) devices. The processor 110 includes one or more processor cores (cores) 111. The processor core 111 in the processor 110 is, for example, a central processing unit (Central Processing unit, CPU) or another specific integrated circuit (Application-Specific Integrated Circuit, ASIC). The processor 110 may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. During actual application, the computer device 100 may alternatively include a plurality of processors.

In this embodiment of this application, the processor 110 is configured to send an upgrade request to the DPU. The processor 110 may further send an upgrade request to another dedicated processor. The dedicated processor is a processor for a specific application or field, for example, a graphics processing unit (graphics processing unit, GPU) configured to process graphics data or a DSP configured to process signals.

The internal memory 120 is a main memory of the computer device 100. The internal memory 120 is usually configured to store various pieces of running software in the operating system 112, input and output data, information exchanged with an external memory, and the like. To improve an access speed of the processor 110, the internal memory 120 needs to have an advantage of a high access speed. In a computer system architecture, a dynamic random access memory (Dynamic Random Access Memory, DRAM) is used as the internal memory 120. The processor 110 can access the internal memory 120 at a high speed through the internal memory controller 130, and perform a read operation and a write operation on any storage unit in the internal memory 120. In addition to the DRAM, the internal memory 120 may alternatively be another random access memory, for example, a static random access memory (Static Random Access Memory, SRAM). In addition, the internal memory 120 may alternatively be a read-only memory (Read-Only Memory, ROM). For example, the read-only memory may be a programmable read-only memory (Programmable Read-Only Memory, PROM), or an erasable programmable read-only memory (Erasable Programmable Read-Only Memory, EPROM). A quantity of internal memories 120 and a type of the internal memory 120 are not limited in this embodiment. In addition, the internal memory 120 may be configured to have a power-off protection function. The power-off protection function means that data stored in a memory is not lost when a system is powered off and then powered on again. An internal memory 120 with a power-off protection function is referred to as a non-volatile memory.

The internal memory controller 130 is a bus circuit controller that controls the internal memory 120 in the computer device 100 and that is configured to manage and plan data transmission from the internal memory 120 to the processor core 111. Data may be exchanged between the internal memory 120 and the processor core 111 through the internal memory controller 130. The internal memory controller 130 may be a separate chip, and is connected to the processor core 111 through a system bus. The internal memory controller 130 may alternatively be integrated into the processor 110, may be built in a northbridge, or may be an independent internal memory controller chip. A specific location and an existence form of the internal memory controller are not limited in this embodiment of this application. During actual application, the internal memory controller 130 may control necessary logic to write data into the internal memory 120 or read data from the internal memory 120. The internal memory controller 130 may be an internal memory controller in a processor system such as a general-purpose processor, a dedicated accelerator, a GPU, an FPGA, or an embedded processor.

The computer device 100 further includes various input/output (Input/Output, I/O) devices 140. The I/O device 140 is hardware for data transmission, and may also be understood as a device connected to an I/O interface. Common I/O devices include a network adapter, a printer, a keyboard, a mouse, and the like. All external memories may also be used as I/O devices, such as hard disks, floppy disks, and optical disks.

The processor 110, the internal memory 120, the internal memory controller 130, and the I/O device 140 are connected through a bus 150. The bus 150 may include a path for transmitting information between the foregoing components (for example, the processor 110 and the internal memory 120). In addition to a data bus, the bus 150 may further include a power bus, a control bus, a status signal bus, and the like. However, for clear description, various buses in the figure are all marked as the bus 150. The bus 150 may be a PCIe bus, an extended industry standard architecture (extended industry standard architecture, EISA) bus, a unified bus (Ubus or UB), a compute express link (CXL) bus, a cache coherent interconnect for accelerators (CCIX) bus, or the like. For example, the processor 110 may access these I/O devices 140 through a PCIe bus. The processor 110 is connected to the internal memory 120 through a double data rate (double data rate, DDR) bus. Herein, different internal memories 120 may communicate with the processor 110 through different data buses. Therefore, the DDR bus may also be replaced with another type of data bus. A bus type is not limited in this embodiment of this application.

It should be noted that the computer device 100 may be referred to as a host. FIG. 1 is only a schematic diagram. The computer device 100 may further include another component, for example, may further include a hard disk, an optical drive, a power supply, a chassis, a heat dissipation system, and another input/output controller and interface, which are not shown in FIG. 1. A quantity of processors, internal memories, and internal memory controllers included in the computer device 100 is not limited in this embodiment of this application.

The computer device 100 may further include a DPU 160 that may be connected to the processor 110 through a PCIe bus. The DPU 160 offloads applications related to artificial intelligence, storage, and the like that run on another chip (for example, the processor 110) of the computer device 100, to improve data processing performance of the computer device 100 and reduce load of the computer device 100.

The DPU 160 may be a small computer device, such as the computer device 100, including a processor, an internal memory, an internal memory controller, and the like. The DPU 160 may upgrade a running application program based on an upgrade request sent by the processor 110 in the computer device 100.

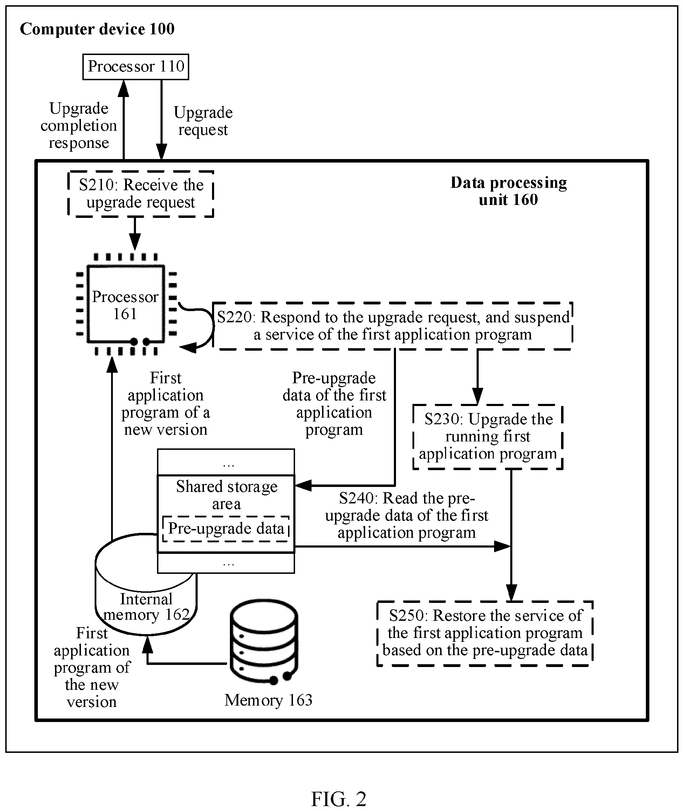

The following describes a process of upgrading an application program run by the DPU with reference to FIG. 2. As shown in FIG. 2, it is assumed that the DPU 160 includes a processor 161, an internal memory 162, and a memory 163. The memory 163 may be a hard disk, and is configured to store an application program of a new version of the DPU 160. For detailed explanations of the processor, the internal memory, and the internal memory controller included in the DPU 160, refer to the foregoing descriptions of the computer device 100. An application upgrade method provided in an embodiment of this application includes the following steps.

S210: The DPU 160 receives an upgrade request sent by the processor 110.

The DPU 160 includes a plurality of processor cores. Different processor cores may run different application programs. The DPU 160 may run a plurality of application programs, and upgrade the plurality of application programs separately. Upgrading any one of the plurality of application programs may not affect running of another application program. The upgrade request may indicate to upgrade one of the plurality of application programs. The upgrade request may include an identifier of an application program, so that the DPU 160 identifies, based on the identifier of the application program, the application program that needs to be upgraded. The application program described in this embodiment of this application may be a hardware driver, a protocol program, a service program configured to meet a user requirement, or the like.

Assuming that the upgrade request may indicate to upgrade a first application program in the plurality of application programs, the DPU 160 performs S220.

S220: The DPU 160 responds to the upgrade request, suspends a service of the first application program, and stores pre-upgrade data of the first application program in a shared storage area.

Upgrading the first application program by the DPU 160 may refer to replacing a first application program of an earlier version with a first application program of a new version. If the DPU 160 upgrades the first application program when the DPU 160 runs the first application program of the earlier version, the service supported by the first application program is interrupted. Therefore, the DPU 160 responds to the upgrade request, suspends the service of the first application program, and stores the pre-upgrade data of the first application program in the shared storage area.

An operating system is a computer program that manages computer hardware and software resources, such as internal memory allocation and internal memory reclamation. If the processor 161 starts a process of the first application program for the first time, the processor 161 applies to the operating system of the DPU 160 for a storage area allocated to the first application program. After the process of the first application program ends running, the operating system needs to reclaim the storage area allocated to the first application program.

To avoid a loss of service data of the first application program when the first application program is upgraded, this embodiment of this application provides a method for allocating a shared storage area by a processor to an application program. When the processor 161 starts the process of the first application program for the first time, the processor 161 allocates a shared storage area used to store the service data and a hardware status of the first application program to the first application program. It should be understood that the shared storage area is inaccessible to the operating system of the DPU 160. Therefore, after the process of the first application program ends running, the operating system does not reclaim the storage area allocated to the first application program.

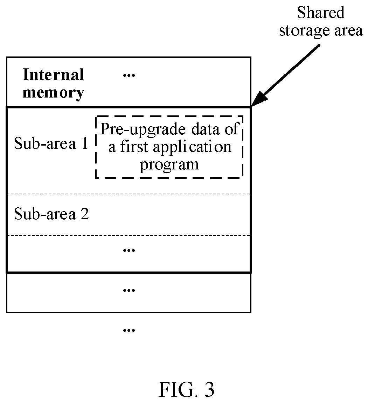

In some embodiments, the processor 161 may allocate a shared storage area based on all application programs that can be run by the DPU 160, and obtain a quantity of sub-areas to which the shared storage area is divided. The shared storage area includes a plurality of sub-areas, and each of the plurality of sub-areas is used to store service data of one of the plurality of application programs and a hardware status during running of the application program. For example, the DPU 160 supports 10 running application programs, the shared storage area allocated by the processor 161 includes 10 sub-areas, and one application program uses one sub-area to store service data of the application program and a hardware status during running of the application program. For example, as shown in FIG. 3, storage resources allocated by the processor 161 to the first application program are from a sub-area in the shared storage area.

It should be noted that the shared storage area may be continuous physical storage space in the internal memory. In other words, the sub-area used to store the service data and the hardware status of the first application program is also continuous physical storage space.

It should be understood that, regardless of whether the processor 161 runs the first application program of the earlier version or the first application program of the new version, the processor 161 stores the service data and the hardware status during running of the first application program in the shared storage area.

The pre-upgrade data includes service data and a hardware status during running of the first application program of the earlier version before the first application program is upgraded. In other words, after starting running the first application program, the processor 161 stores the service data and the hardware status during running of the first application program of the earlier version in the shared storage area. In some embodiments, if service data and a hardware status during running of the first application program of the earlier version are not stored in the shared storage area in a timely manner before the first application program is upgraded, the processor 161 responds to the upgrade request, suspends the service of the first application program, and stores, in the shared storage area, the service data and the hardware status of the first application program of an earlier version that are not stored in the shared storage area in a timely manner. Therefore, after upgrading the first application program, the processor 161 can obtain, in a timely manner, the pre-upgrade data before the first application program is upgraded, and restore the service of the first application program. Therefore, the pre-upgrade data includes not only the service data and the hardware status during running of the first application program of the earlier version before the first application program is upgraded, but also the service data and the hardware status during running of the first application program of the earlier version that are not stored into the shared storage area in a timely manner.

The hardware status includes a status of a PCIe bus for connecting the DPU 160 to the computer device 100, a status of a hardware channel (for example, a DMA engine channel, a protocol channel (queue), or a network channel) between the PCIe bus and the internal memory 162 of the DPU 160, and a status of a channel between the internal memory 160 of the DPU 160 and an external device.

S230: The DPU 160 upgrades the running first application program.

The processor 161 of the DPU 160 may read the first application program of the new version from the memory 163 of the DPU 160, and load the first application program of the new version into the internal memory 162. The processor 161 reads the first application program of the new version from the internal memory 162, runs the first application program of a new version, and replaces the first application program of the earlier version with the first application program of the new version. The processor 161 also sets a running level of the first application program to a user mode, to avoid restarting the operating system of the DPU 160. The operating system is usually restarted at a minute level. Compared with a manner of restarting the operating system to restart the application program, this manner shortens duration of upgrading the first application program.

A kernel mode may also be referred to as a host kernel mode. Because access capabilities between different programs need to be limited, to avoid obtaining internal memory data of another program or obtaining data of a peripheral device, the processor is divided into two permission levels: the user mode and the kernel mode. When a task or a process executes a system call and is executed in kernel code, the process is referred to as being in a kernel mode. In this case, the processor runs in the kernel code with a highest privilege level. In the kernel mode, the processor may access all data in the internal memory, and peripheral devices such as an internal memory and a network adapter.

S240: The DPU 160 reads the pre-upgrade data of the first application program from the shared storage area.

Because the shared storage area is an area inaccessible to the operating system of the DPU 160, even if the service of the first application program is interrupted when the DPU 160 upgrades the first application program, the operating system of the DPU 160 does not reclaim the shared storage area. Therefore, the shared storage area still stores the pre-upgrade data of the first application program. After upgrading the running first application program, the DPU 160 reads the pre-upgrade data of the first application program from the shared storage area. The pre-upgrade data may include the service data and the hardware status during running of the first application program of the earlier version before the first application program is upgraded. Optionally, the pre-upgrade data may further include the service data and the hardware status during running of the first application program of the earlier version that are not stored in the shared storage area in a timely manner.

For example, a basic input/output system (Basic Input/Output System, BIOS) of the DPU 160 divides a part of continuous physical internal memory space as the shared storage area based on an internal memory size required by a service process. When the first application program is started, an interface for creating the shared storage area is provided, and an identifier of the first application program is bound to the shared storage area. When the first application program is restarted, an interface for retrieving the shared storage area is provided, and the DPU 160 reads, based on a first sub-area in the shared storage area associated with the identifier of the first application program, the pre-upgrade data from the first sub-area.

S250: The DPU 160 restores the service of the first application program based on the pre-upgrade data.

The DPU 160 reads the pre-upgrade data of the first application program from the shared storage area, and can quickly restore the service of the first application program based on the pre-upgrade data. Because the computer device 100 or the DPU does not need to be restarted in the upgrading process, a service process of the first application program in the user mode is upgraded within one second. Although the service drops or returns to zero within one second, the service continues to run after one second, making the application program upgrade imperceptible to users.

For example, in a banking service system, the first application program is configured to implement a deposit service function. When the DPU 160 upgrades the first application program, a deposit service is interrupted. If the DPU 160 stores deposit service data and a hardware status in the shared storage area before upgrading the first application program, the DPU 160 reads the deposit service data and the hardware status from the shared storage area, and restores the deposit service based on the deposit service data and the hardware status, to avoid a failure of an operation request of the deposit service. Therefore, the DPU 160 can quickly restore the deposit service when upgrading an application program, to prevent bank staff from re-operating the deposit service, and improve user experience.

Optionally, after successfully upgrading the first application program, the DPU 160 may send an upgrade completion response to the processor 110 to inform the computer device 100 that the first application program has been successfully upgraded.

It can be learned that, the DPU deploys an application program that needs to be frequently upgraded in a service process in the user mode, and quickly restarts an upgraded service process without restarting the operating system of the DPU. In addition, the DPU deploys the shared storage area to provide a dedicated shared storage area for the service process. A service-related hardware status, queue information, and an I/O status are all stored into the shared storage area. When a process of the application program of the new version is started, the data in the shared storage area can be restored, and the service running before the upgrade can continue to be processed. In this way, an upgrade operation of the DPU is imperceptible to a host, to improve user experience.

The following describes an application upgrade process provided in an embodiment of this application by using an example. It is assumed that a DPU is configured to implement a control function of a non-volatile memory express (Non-Volatile Memory Express, NVMe) protocol, and provide an interface based on the NVMe protocol for a host connected to the DPU. The DPU provides two 100GE service interfaces to access a storage network. The storage network connected to the DPU includes at least one of a storage array and a distributed storage resource pool. The DPU integrates storage space in the storage network, converts the storage space into a namespace (namespace) of the NVMe protocol, and provides the storage space for the host to use. The host sends a service data flow to the DPU, and the DPU sends the service data flow to the storage array or the distributed storage resource pool. In this embodiment, there are three main data communication channels: an NVMe queue between the host and the DPU, an NVMe over fabrics (NVMe over fabrics, NOF) queue between the DPU and the storage array, and a data DMA queue. When the DPU upgrades an application program and a service process of an application program of a new version is restarted, a main task of quickly restoring a host service is to restore information about the foregoing three queues and information about a running I/O context.

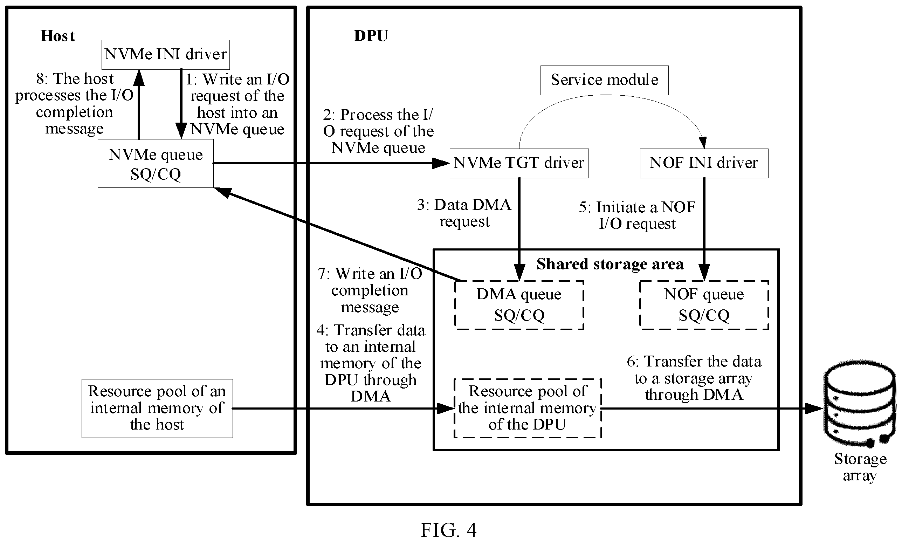

A procedure of one I/O request from the host includes eight steps in FIG. 4 as follows: 1: An NVMe initiator (initiator, INI) driver writes the I/O request of the host into the NVMe queue, where the NVMe queue includes a send queue (send queue, SQ) and a completion queue (completion queue, CQ). 2: The NVMe INI driver processes the I/O request of the NVMe queue. 3: An NVMe target (target, TGT) driver initiates a data DMA request of the I/O request. 4: Transfer data from an internal memory of the host to an internal memory of the DPU through DMA. 5: The NOF INI driver initiates a NOF I/O request. 6: Transfer the data from the internal memory of the DPU to the storage array through DMA. 7: Write an I/O completion message. 8: The host processes the I/O completion message. Step 2 to step 8 are main processes of processing the I/O request by the DPU. The NVMe TGT driver and the NOF INI driver are the key to a startup process of the service process.

The DPU shuts down a running application program of an old version and uses an executable file of an application program of a new version to restart the service process. The DPU calls an initialization function of the NOF INI driver. The NOF INI driver checks that the service process is not started for the first time, and performs a restoration procedure. Specifically, a data DMA operation is stopped and the DMA queue is restored to an initialized status; internal memory resources and a status of a service interface object are restored; internal memory resources and a status of a NOF INI driver connection are restored; queue resources and a status of the NOF INI driver connection are restored; and an uncompleted I/O context is cleared and an I/O request is re-initiated by the NVMe TGT driver. The DPU calls an initialization function of the NVMe TGT driver. The NVMe TGT driver checks that the service process is not started for the first time, and performs a restoration procedure. Specifically, the data DMA operation is stopped and the used data DMA queue is restored to the initialized status; internal memory resources and a status of an NVMe control object are restored; internal memory resources and a status of the NVMe queue are restored; internal memory resources and a status of an I/O context that is being executed are restored, and an uncompleted I/O context is re-executed from step 3 in FIG. 4; and processing of the NVMe queue is restored, and a new I/O request initiated by the host continues to be processed.

It may be understood that, to implement functions in the foregoing embodiments, a computing device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

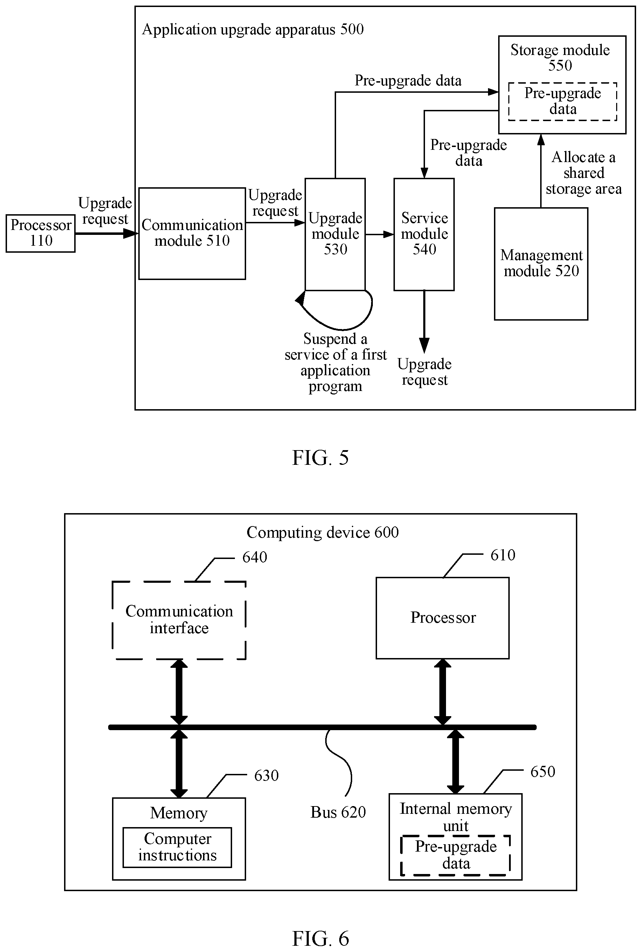

With reference to FIG. 1 to FIG. 4, the foregoing describes in detail the application upgrade method provided in embodiments. With reference to FIG. 5, the following describes an application upgrade apparatus provided in embodiments.

FIG. 5 is a possible schematic diagram of a structure of an application upgrade apparatus according to an embodiment. The application upgrade apparatuses may be configured to implement functions of the processor in the foregoing method embodiments, and therefore can also achieve beneficial effects of the foregoing method embodiments. In this embodiment, the application upgrade apparatus may be the data processing unit 160 shown in FIG. 2, or may be a module (for example, a chip) used in a server.

As shown in FIG. 5, the application upgrade apparatus 500 includes a communication module 510, a management module 520, an upgrade module 530, a service module 540, and a storage module 550. The application upgrade apparatus 500 is configured to implement functions of the data processing unit 160 in the method embodiment shown in FIG. 2.

The communication module 510 is configured to receive an upgrade request sent by a computer device 100, where the upgrade request indicates to upgrade a first application program. For example, the communication module 510 is configured to perform S210 in FIG. 2.

The upgrade module 530 is configured to respond to the upgrade request, suspend a service of the first application program, and store pre-upgrade data of the first application program in a shared storage area. For example, the upgrade module 530 is configured to perform S220 in FIG. 2.

The upgrade module 530 is configured to upgrade the first application program in a plurality of application programs running on a DPU.

The service module 540 is configured to read the pre-upgrade data of the first application program from the shared storage area of an internal memory in the DPU, and restore the service of the first application program based on the pre-upgrade data. The shared storage area is used to store service data of the plurality of application programs. The shared storage area is inaccessible to an operating system of the DPU. For example, the upgrade module 530 is configured to perform S230, S240, and S250 in FIG. 2.

The management module 520 is configured to allocate, when a process of the first application program is started for the first time, a shared storage area used to store service data and a hardware status of the first application program to the first application program.

The storage module 550 may correspond to the storage medium configured to store information such as the pre-upgrade data in the foregoing method embodiments.

The application upgrade apparatus 500 may further include a process management module, a protocol module, a driver module, and the like. The process management module is configured to manage running processes. The protocol module is configured to implement protocol conversion. The driver module is configured to implement conversion between software and hardware.

It should be understood that the application upgrade apparatus 500 in this embodiment of this application may be implemented by the DPU. The application upgrade apparatus 500 according to this embodiment of this application may correspondingly perform the method described in embodiments of this application, and the foregoing and other operations and/or functions of units in the application upgrade apparatus 500 are separately used to implement corresponding procedures of the methods in FIG. 2. For brevity, details are not described herein again.

FIG. 6 is a schematic diagram of a structure of a computing device 600 according to an embodiment. As shown in the figure, the computing device 600 includes a processor 610, a bus 620, a memory 630, an internal memory unit 650 (which may also be referred to as a main memory (main memory) unit), and a communication interface 640. The processor 610, the memory 630, the internal memory unit 650, and the communication interface 640 are connected through the bus 620.

It should be understood that in this embodiment, the processor 610 may be a CPU, or the processor 610 may be another general-purpose processor, a DSP, an ASIC, an FPGA or another programmable logic device, a discrete gate or a transistor logic device, a discrete hardware component, or the like. The general-purpose processor may be a microprocessor or any conventional processor or the like.

The communication interface 640 is configured to implement communication between the computing device 600 and an external device or component. In this embodiment, the communication interface 640 is configured to perform data exchange with another computing device.

The bus 620 may include a path for transmitting information between the foregoing components (for example, the processor 610, the internal memory unit 650, and the memory 630). In addition to a data bus, the bus 620 may further include a power bus, a control bus, a status signal bus, and the like. However, for clear description, various buses in the figure are all marked as the bus 620. The bus 620 may be a peripheral component interconnect express (Peripheral Component Interconnect Express, PCIe) bus, an extended industry standard architecture (extended industry standard architecture, EISA) bus, a unified bus (unified bus, Ubus, or UB), a computer express link (compute express link, CXL) bus, a cache coherent interconnect for accelerators (cache coherent interconnect for accelerators, CCIX) bus, or the like.

In an example, the computing device 600 may include a plurality of processors. The processor may be a multi-core processor. The processor herein may be one or more devices, circuits, and/or computing units configured to process data (for example, computer program instructions). The processor 610 may call pre-upgrade data stored in the memory 630, and restore a service of a first application program based on the pre-upgrade data.

It should be noted that, in FIG. 6, only an example that the computing device 600 includes one processor 610 and one memory 630 is used. The processor 610 and the memory 630 each are configured to indicate a type of device or component. In a specific embodiment, a quantity of each type of devices or components may be determined based on a service requirement.

The internal memory unit 650 may correspond to the storage medium configured to store information such as the pre-upgrade data in the foregoing method embodiments. The internal memory unit 650 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 630 is configured to store a first application program of a new version, and may be a solid-state drive or a mechanical hard drive.

It should be understood that the computing device 600 may be a DPU. The computing device 600 according to this embodiment may correspond to the application upgrade apparatus 500 in embodiments, and may correspond to a corresponding execution body based on FIG. 2, and the foregoing and other operations and/or functions of the modules in the application upgrade apparatus 500 are separately used to implement corresponding procedures in FIG. 2. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist as discrete components in a network device or a terminal device.

This application further provides a chip system. The chip system includes a processor, configured to implement a function of the data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or a part of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An application upgrade method, wherein the method is performed by a data processing unit, DPU connected to a host, and the method comprises:
upgrading a first application program in a plurality of application programs running on the DPU;
reading pre-upgrade data of the first application program from a shared storage area of an internal memory in the DPU, wherein the shared storage area is used to store service data of the plurality of application programs, and the shared storage area is inaccessible to an operating system of the DPU; and
restoring a service of the first application program based on the pre-upgrade data.

2. The method according to claim 1, wherein before the upgrading a first application program in a plurality of application programs running on the DPU, the method further comprises:
receiving an upgrade request sent by the host, wherein the upgrade request indicates to upgrade the first application program; and
responding to the upgrade request, suspending the service of the first application program, and storing the pre-upgrade data of the first application program in the shared storage area.

3. The method according to claim 1 or 2, wherein the pre-upgrade data comprises service data of the first application program and a hardware status during running of the first application program before the first application program is upgraded.

4. The method according to any one of claims 1 to 3, wherein the shared storage area comprises a plurality of sub-areas, and each of the plurality of sub-areas is used to store service data and a hardware status of one of the plurality of application programs.

5. An application upgrade apparatus, comprising:
an upgrade module, configured to upgrade a first application program in a plurality of application programs running on a DPU; and
a service module, configured to read pre-upgrade data of the first application program from a shared storage area of an internal memory in the DPU, wherein the shared storage area is used to store service data of the plurality of application programs, and the shared storage area is inaccessible to an operating system of the DPU, wherein
the service module is further configured to restore a service of the first application program based on the pre-upgrade data.

6. The apparatus according to claim 5, wherein the apparatus further comprises a communication module;
the communication module is configured to receive an upgrade request sent by a host, wherein the upgrade request indicates to upgrade the first application program; and
the upgrade module is configured to: respond to the upgrade request, suspend the service of the first application program, and store the pre-upgrade data of the first application program in the shared storage area.

7. The apparatus according to claim 5 or 6, wherein the pre-upgrade data comprises service data of the first application program and a hardware status during running of the first application program before the first application program is upgraded.

8. The apparatus according to any one of claims 5 to 7, wherein the shared storage area comprises a plurality of sub-areas, and each of the plurality of sub-areas is used to store service data and a hardware status of one of the plurality of application programs.

9. A processor, wherein the processor is configured to perform operation steps of the method according to any one of claims 1 to 4.

10. A computing device, comprising a memory and a processor, wherein the memory is configured to store a set of computer instructions; and when executing the set of computer instructions, the processor performs operation steps of the method according to any one of claims 1 to 4.

11. A chip system, wherein the chip system comprises a memory and at least one processor, the memory is configured to store a set of computer instructions; and when executing the set of computer instructions, the processor performs operation steps of the method according to any one of claims 1 to 4.
